# EUROPÄISCHE PATENTANMELDUNG

(11) **EP 3 757 990 A1**
(43) Veröffentlichungstag der Anmeldung: **30.12.2020**
(21) Anmeldenummer: 20176299.4
(22) Anmeldetag: 25.05.2020
(51) Int. Cl.: G10L 15/22, G10L 15/28, G06F 3/01

(54) **VERFAHREN ZUR BEDIENUNG EINES GERÄTS DURCH EINEN BENUTZER MITTELS EINER SPRACHSTEUERUNG**

(30) Priorität: 25.06.2019 DE 102019117064; 18.12.2019 DE 102019134874
(71) Anmelder: Miele & Cie. KG, 33332 Gütersloh (DE)
(72) Erfinder: Ebke, Daniel, 33613 Bielefeld (DE); Ennen, Volker, 32257 Bünde (DE); Metz, Thomas, 32257 Bünde (DE)

(57) **Zusammenfassung**

Die Erfindung betrifft ein Verfahren zur Bedienung eines Geräts (1) durch einen Benutzer (4) mittels einer Sprachsteuerung (2) mit wenigstens den Schritten:
• Erfassen (100) einer Bedienung des Geräts (1) von dem Benutzer (4) durch das Gerät (1),
• Aktivieren (200) der Sprachsteuerung (2) durch das Gerät (1),
• Erfassen (300) einer Spracheingabe des Benutzers (4) durch die Sprachsteuerung (2),
• Erkennen (500) einer Information und/oder Anweisung in der erfassten Spracheingabe des Benutzers (4) durch die Sprachsteuerung (2), und
• Ausführen (700) einer Bedienung des Geräts (1) durch die Sprachsteuerung (2) gemäß der erkannten Information und/oder Anweisung.

## Beschreibung

Die Erfindung betrifft ein Verfahren zur Bedienung eines Geräts durch einen Benutzer mittels einer Sprachsteuerung sowie ein Gerät zur Durchführung eines derartigen Verfahrens gemäß den unabhängigen Ansprüchen.

Heutzutage verbreiten sich die Möglichkeiten der Sprachsteuerung von elektronischen Geräten zunehmend. Ist es seit längerem bekannt, bei einem einzelnen Gerät wie z.B. einem Automobil z.B. die Telefonfunktion mittels Sprache des Benutzers zu nutzen und den Anzurufenden bzw. dessen Telefonnummer per Spracheingabe vorzugeben, so kommen seit einigen Jahren sprachgesteuerte persönliche Assistenten auf den Markt, welche im Haushalt platziert werden und dort der allgemeinen und vielfältigen Unterstützung der Bewohner per Spracheingabe dienen. Derartige sprachgesteuerte persönliche Assistenten sind drahtlos z.B. über ein heimisches WLAN mit dem Internet verbunden und können so auf viele Informationen zugreifen, um diese dem Benutzer auf Anfrage zur Verfügung zustellen.

Beispielsweise ist seitens des Unternehmens Amazon.com Inc. der sprachgesteuerte persönliche Assistent "Amazon Echo" bekannt, welcher mittels verschiedener Signalwörter wie z.B. "Alexa" oder "Echo" durch eine Spracheingabe in das Gerät, durch das Drücken einer Taste an dem Gerät selbst sowie mittels einer entsprechenden Fernbedienung durch das Drücken einer Taste dort und durch eine Spracheingabe in die Fernbedienung aus einem Bereitschaftsmodus heraus aktiviert werden kann. Dann kann vom Benutzer eine Spracheingabe erfolgen, auf welche der sprachgesteuerte persönliche Assistent je nach Anwendungsfall reagieren kann. Üblicherweise erfolgt eine Sprachausgabe seitens des sprachgesteuerten persönlichen Assistenten als Reaktion auf die Spracheingabe des Benutzers.

Mittels sog. Skill-Erweiterungen kann der Funktionsumfang des sprachgesteuerten persönlichen Assistenten erweitert werden, so dass z.B. auch Musik abgespielt werden kann. Ferner kann hierdurch die Steuerung von entsprechenden Smart-Home-Geräten erfolgen, welche dazu ausgebildet sind, z.B. über ein heimisches Drahtlosnetzwerk gesteuert zu werden. Weitere derzeit verbreitere sprachgesteuerte persönliche Assistenten sind z.B. "Siri" der Apple Inc. als Bestandteil eines IPhones sowie "Cortana" der Microsoft Corporation als Software für Computer mit Microsoft-Betriebssystemen.

Üblich ist es bei bekannten sprachgesteuerten persönlichen Assistenten allgemein, dass diese, wie bereits erwähnt, über ein Signalwort wie z.B. "Alexa", "Siri" oder "Cortana" vom Benutzer angesprochen werden müssen, um den sprachgesteuerten persönlichen Assistenten aus einem Bereitschaftsmodus in einen Handlungsmodus zu versetzen. Im Handlungsmodus erwartet der sprachgesteuerte persönliche Assistent nun an ihn gerichtete Anweisungen und Informationen per Sprache vom Benutzer, um diese zu verarbeiten und entsprechende Ausgaben bzw. Reaktionen zu erzeugen. Dies kann eine Rückmeldung bzw. eine Antwort per Sprache an den Benutzer sein. Auch kann z.B. bei einer Smart-Home-Anwendung das Licht im Raum eingeschaltet, gedimmt oder ausgeschaltet werden.

Soll ein derartiger sprachgesteuerter persönlicher Assistent zur Bedienung eines Haushaltsgeräts und insbesondere eines Küchengeräts wie z.B. eines Kochfelds verwendet werden um einen Garprozess einzuleiten, so könnte dies z.B. mit der folgenden Spracheingabe des Benutzers erfolgen: "Alexa sage Miele Kochfeld hinten links Kartoffeln kochen".

Diese Anweisung lässt sich in einzelne Bestandteile gliedern, welche jeweils eine bestimmte Bedeutung haben:
- "Alexa" - Signalwort zur Aktivierung des sprachgesteuerten persönlichen Assistenten; die nun unmittelbar folgenden Worte stellen einen Sprachbefehl dar
- "sage Miele" - Auswahl einer Funktion (Skill) des sprachgesteuerten persönlichen Assistenten; die folgenden Worte sind als Anweisung an ein Miele-Haushaltsgerät zu verstehen
- "Kochfeld" - Auswahl des Geräts, welches bedient werden soll
- "hinten links" - Ort innerhalb des angesprochenen Geräts
- "Kartoffeln kochen" - Aktion des angesprochenen Ortes.

Somit muss der Benutzer eine relativ lange Wortfolge erstellen und aussprechen. Dies stellt einen gewissen Aufwand für den Benutzer dar, sich diese Wortfolge zu überlegen. Dabei muss üblicherweise die Reihenfolge der Bestandteile wie zuvor erläutert stimmen, um die gewünschte Bedienung zu erreichen. Auch müssen die Bestandteile vollständig sein. Ferner muss die überlegte Wortfolge vom Benutzer auch in dieser Form ausgesprochen werden, d.h. Versprecher sind zu vermeiden. Die Wortfolge sollte auch flüssig und an einem Stück ausgesprochen werden, um vom sprachgesteuerten persönlichen Assistenten als eine zusammenhängende Anweisung erkannt zu werden. Dies kann von dem Benutzer einiges an Konzentration erfordern und daher als unbequem und umständlich empfunden werden, so dass von dieser Möglichkeit der Bedienung eines Haushaltsgeräts Abstand genommen werden kann.

Auch muss die o.g. Wortfolge von dem sprachgesteuerten persönlichen Assistenten korrekt erfasst werden. Dies ist ebenfalls umso schwieriger, desto länger die Wortfolge ist. Des Weiteren müssen alle o.g. Bestandteile der Wortfolge auch vom sprachgesteuerten persönlichen Assistenten korrekt verarbeitet werden, um die gewünschte Bedienung auszuführen. Auch dieser Aufwand sowie die Fehleranfälligkeit der Verarbeitung steigen mit der Anzahl der Wörter der Wortfolge sowie mit der Komplexität des Inhalts der Wortfolge. Dies kann zu fehlerhaften Bedienungen führen.

Ferner kann der sprachgesteuerte persönliche Assistent dem Benutzer mitteilen, die Anweisung nicht richtig oder nicht vollständig verstanden zu haben, so dass der Benutzer die Wortfolge wiederholen muss. Dies kann den Benutzer ebenfalls demotivieren, diese Möglichkeit der Bedienung eines Haushaltsgeräts zu verwenden.

Insgesamt ist es bei derartigen sprachgesteuerten persönlichen Assistenten nachteilig, dass mittels des Signalworts oder durch das Drücken eines dem Gerät des sprachgesteuerten persönlichen Assistenten zugeordneten Knopfes lediglich eine Aktivierung der eigentlichen Sprachsteuerung erfolgen kann. Darüberhinausgehende Informationen über die vom Benutzer angestrebte Handlung erhält der sprachgesteuerte persönliche Assistent hierdurch nicht.

Der Erfindung stellt sich somit das Problem, die Bedienung eines Geräts mittels eines sprachgesteuerten persönlichen Assistenten zu erleichtern. Insbesondere soll die Aktivierung eines sprachgesteuerten persönlichen Assistenten aus dem Bereitschaftsmodus vereinfacht werden. Zusätzlich oder alternativ soll die Wortfolge zur Bedienung eines Geräts mittels eines sprachgesteuerten persönlichen Assistenten verkürzt werden. Zusätzlich oder alternativ soll die Bedienung eines Geräts mittels eines sprachgesteuerten persönlichen Assistenten für den Benutzer einfacher, schneller und bzw. oder intuitiver als bisher bekannt erfolgen können. Zumindest soll eine Alternative zu bekannten sprachgesteuerten persönlichen Assistenten bereitgestellt werden.

Erfindungsgemäß wird dieses Problem durch ein Verfahren mit den Merkmalen des Patentanspruchs 1 sowie durch ein Gerät mit den Merkmalen des Patentanspruchs 24 gelöst. Vorteilhafte Ausgestaltungen und Weiterbildungen der Erfindung ergeben sich aus den nachfolgenden Unteransprüchen.

Somit betrifft die Erfindung ein Verfahren zur Bedienung eines Geräts durch einen Benutzer mittels einer Sprachsteuerung mit wenigstens den Schritten:
- Erfassen einer Bedienung des Geräts von dem Benutzer durch das Gerät,
- Aktivieren der Sprachsteuerung durch das Gerät,
- Erfassen einer Spracheingabe des Benutzers durch die Sprachsteuerung,
- Erkennen einer Information und bzw. oder Anweisung in der erfassten Spracheingabe des Benutzers durch die Sprachsteuerung, und
- Ausführen einer Bedienung des Geräts durch die Sprachsteuerung gemäß der erkannten Information und bzw. oder Anweisung.

Mit anderen Worten kann ein Gerät, welches von einem Benutzer verwendet werden soll, eine Bedienung erkennen. Dabei kann diese Bedienung jegliche Interaktion des Benutzers mit dem zu bedienenden Gerät sein inkl. einer Annährung des Benutzers an das Gerät, wie weiter unten noch näher beschrieben werden wird. Unter einer Sprachsteuerung kann eine Sprachsteuerungseinheit verstanden werden, welche als Hardware und bzw. oder als Software realisiert sein und zur Ausführung einer Sprachsteuerungsfunktion ausgebildet sein kann.

Hierdurch kann eine Aktivierung einer Sprachsteuerung ausgelöst werden, welche von dem Gerät in Reaktion auf die Bedienung seitens des Benutzers erfolgt. Mittels der Sprachsteuerung kann nun eine Spracheingabe des Benutzers z.B. in Form eines Wortes, mehrerer zusammenhängender Worte bzw. eines ganzen Satzes erfasst und hieraus wenigstens eine Information und bzw. oder wenigstens eine Anweisung erkannt werden. Eine Anweisung kann z.B. die Auswahl eines Skills wie eingangs beschrieben oder eine Veranlassung einer Aktion des Geräts wie z.B. "Braten" oder "Timer starten" sein. Eine Information kann z.B. ein Parameter einer Aktion wie z.B. eine Leistungsstufe, eine Temperatur, eine Zeitdauer eines Timers und dergleichen sein. Die Umsetzung dieser Anweisung und bzw. oder die Verwendung der Information als Bedienung des Geräts kann anschließend durch die Sprachsteuerung veranlasst werden.

Die Sprachsteuerung kann dabei vollständig oder teilweise ein Bestandteil des zu bedienenden Geräts sein oder auch teilweise bis vollständig unabhängig von dem zu bedienenden Gerät umgesetzt sein, wie ebenfalls weiter unten noch näher beschrieben werden wird. Insbesondere kann eine Komponente zur Spracherfassung wie z.B. ein Mikrophon ein Bestandteil des zu bedienenden Geräts sein. Die erfasste Spracheingabe des Benutzers kann dann z.B. drahtlos an eine zentrale Sprachsteuerungseinheit z.B. der Küche, des Haushalts bzw. des Hauses als Ganzes weitergeleitet werden, welche die Erkennung der Information und bzw. oder Anweisung ausführen kann. Alternativ kann auch ein Mikrophon einer zentralen Sprachsteuerungseinheit verwendet werden.

In jedem Fall kann anschließend das Ergebnis der Spracherkennung zur Ausführung der Bedienung des Geräts an dieses übermittelt werden, um dort z.B. durch eine geräteeigene Steuerungseinheit umgesetzt zu werden. Hierdurch können mehrere Geräte mittels einer einzigen zentralen Sprachsteuerungseinheit wie zuvor beschrieben betrieben werden, was den Aufwand und die Kosten der Sprachsteuerung als Ganzes reduzieren kann. Eine derartige Sprachsteuerung kann auch als Sprachsteuerungssystem oder als Sprachassistenzsystem bezeichnet werden, wobei die zentrale Sprachsteuerungseinheit beispielsweise ein sprachgesteuerter persönlicher Assistent sein kann.

Dabei liegt der Erfindung die Erkenntnis zugrunde, dass auf diese Art und Weise die Anzahl der Worte des Benutzers reduziert werden kann, welche zur Bedienung des Geräts mittels Sprachsteuerung erforderlich sind. So kann das Signalwort entfallen, da das Aktivieren der Sprachsteuerung durch die Bedienung des Geräts seitens des Benutzers erfolgt. Auch können bisher gesprochene Informationen, um das Gerät zu spezifizieren, welches vom Benutzer mittels der Sprachsteuerung bedient werden soll, entfallen, da die Bedienung des Benutzers an genau diesem Gerät selbst erfolgt. Ferner kann die Bedienung des Benutzers bereits eine von mehreren Funktionen des Geräts spezifizieren, so dass auch hierdurch die Anzahl der verbleibenden erforderlichen Informationen reduziert werden kann, welche noch mittels der Sprachsteuerung zu ergänzen sind. Diese kann sich somit z.B. auf die Aktion dieser Funktion des Geräts sowie dessen Parameter beschränken.

Auf diese Art und Weise kann die Anzahl der Informationen, welche vom Benutzer ausgesprochen und von der Sprachsteuerung erfasst, erkannt und umgesetzt werden müssen, deutlich gegenüber den eingangs beschriebenen bekannten Sprachsteuerungen reduziert werden. Dies kann den Aufwand für den Benutzer reduzieren und seine Akzeptanz der Sprachsteuerung bzw. dessen Sprachsteuerungsfunktion erhöhen. Auch kann der Aufwand der Sprachsteuerung bzw. dessen Spracherkennung reduziert werden. Dies kann auch die Zuverlässigkeit der Spracherkennung erhöhen, da weniger Informationen verarbeitet werden müssen.

Beispielweise kann durch eine an den üblichen Ablauf einer Bedienung eines Geräts angepasste Bewegung des Benutzers die Sprachsteuerung aktiviert und gleichzeitig mit Informationen versorgt werden, welche bisher vom Benutzer ausgesprochen werden mussten. Es kann auch eine Kombination verschiedener Bedienmöglichkeiten angeboten werden. So kann der Benutzer in jeder Situation die für ihn gerade günstigste Version auswählen.

Beispielweise kann das erfindungsgemäße Verfahren bei einem Kochfeld mit mehreren Kochstellen derart umgesetzt werden, dass z.B. durch das Betätigen eines Bedienelements für z.B. die Kochstelle hinten links die Information, welches Gerät und welcher Ort des Geräts vom Benutzer verwendet werden soll, dem Gerät mitgeteilt wird. Diese Information kann vom Kochfeld an die Sprachsteuerung wie z.B. an einen sprachgesteuerten persönlichen Assistenten gesendet werden, so dass hierdurch das bisher erforderliche Signalwort, die Auswahl einer Funktion, die Auswahl eines Geräts sowie die Spezifikation des Ortes innerhalb des Geräts entfallen können.

Die Sprachsteuerung kann hierdurch aktiviert werden. Der darauffolgende Sprachbefehl des Benutzers wie z.B. "Kartoffeln" kann von der Sprachsteuerung erfasst, erkannt und ausgewertet werden. Das Ergebnis der Spracherkennung der Sprachsteuerung kann an das Gerät als Empfänger übertragen werden. Hier wird der Befehl ausgeführt und z.B. das Automatikprogramm "Kartoffeln" an der Kochstelle hinten links gestartet. Auf diese Art und Weise kann der Benutzer mit einer einfachen Handbewegung und einem einzigen Wort ein Garprogramm starten.

Das erfindungsgemäße Verfahren kann auch bei anderen Küchengeräten wie z.B. bei einem Dampfgarer, bei einem Backofen, bei einer Mikrowelle oder dergleichen angewendet werden. Besonders sinnvoll kann dies bei Geräten mit umfangreichen Eingabemöglichkeiten wie z.B. bei Geräten mit einer Vielzahl von spezialisierten Garprogrammen sein. Hier kann eine Handlung und ein Wort das Hangeln durch Menüs bis zu dem gewünschten Automatikprogramm ersetzen.

Die Zuordnung der Information und bzw. oder Anweisung, welche seitens der Sprachsteuerung aus der erfassten Spracheingabe des Benutzers erkannt wurde, zu dem Gerät, welches seitens des Benutzers mittels Sprache gesteuert werden soll, kann dadurch erfolgen, dass das Aktivieren der Sprachsteuerung durch die Bedienung genau dieses Geräts seitens des Benutzers erfolgt ist. Insbesondere kann anschließend ein Deaktivieren der Sprachsteuerung erfolgen, wie weiter unten noch näher beschrieben werden wird, so dass eine eindeutige Zuordnung einer einzigen erfassten Spracheingabe zu dem Gerät erfolgen kann, welches die Sprachsteuerung aktiviert hat. Ebenso können in dem Fall, falls die aktivierte Sprachsteuerung zumindest für eine gewisse Zeit aktiviert bleibt, um weitere Spracheingaben des Benutzers zu erfassen, alle seitens der Sprachsteuerung aus den erfassten Spracheingaben des Benutzers erkannten Informationen und bzw. oder Anweisungen weiterhin dem Gerät zugeordnet werden, dessen Bedienung das Aktivieren der Sprachsteuerung ausgelöst hat. Auch hierdurch kann eine eindeutige Zuordnung aller erfasster Spracheingaben zu einem einzigen Gerät erfolgen.

Gemäß einem Aspekt der Erfindung ist die Bedienung des Geräts durch den Benutzer eine zusätzliche Bedienhandlung, welche über einen bestimmungsgemäßen Gebrauch des Geräts hinausgeht. Mit anderen Worten kann eine zusätzliche Handlung des Benutzers erforderlich sein, welche ausschließlich der Aktivierung der Sprachsteuerung dient. Dies kann z.B. über die Betätigung eines entsprechenden Knopfes, der Berührung einer entsprechenden Fläche und dergleichen erfolgen, wie weiter unten noch näher beschrieben werden wird. Hierdurch kann sichergestellt werden, dass die Sprachsteuerung nur dann aktiviert wird, wenn der Benutzer dies gezielt und bewusst veranlasst sowie wünscht. Andernfalls kann das Aktivieren der Sprachsteuerung unterbleiben, so dass dem Benutzer die Wahl überlassen werden kann, von der Sprachsteuerung wie zuvor beschrieben unterstützt zu werden oder nicht.

Alternativ ist die Bedienung des Geräts durch den Benutzer eine Bedienhandlung eines bestimmungsgemäßen Gebrauchs des Geräts. Mit anderen Worten wird eine Handlung des Benutzers bei der Bedienung des Geräts, welche der Benutzer ohnehin bei dem bestimmungsgemäßen Gebrauch des Geräts vornimmt, zusätzlich zur Aktivierung der Sprachsteuerung verwendet. Dies kann z.B. das Öffnen oder das Schließen der Garraumtür einer Mikrowelle, eines Backofens, eines Dampfgarers und dergleichen sein. Hierdurch kann sichergestellt werden, dass das Aktivieren der Sprachsteuerung durch den Benutzer nicht versehentlich vergessen werden kann, so dass die Sprachsteuerung dem Benutzer in jedem Fall zur Verfügung steht. Auch kann dem Benutzer die Aktivierung der Sprachsteuerung durch eine zusätzliche Handlung erspart bleiben, was Zeit sparen sowie für den Benutzer komfortabler sein kann.

Mit anderen Worten kann nunmehr eine Eingabe des Benutzers, anstelle durch eine zusätzliche besondere Nutzeraktion, auch automatisch und selbsttätig die Sprachsteuerung aktivieren. Beispielsweise kann eine Bedienhandlung eines bestimmungsgemäßen Gebrauchs des Geräts durch den Benutzer, dass z.B. ein Lebensmittel in den Garraum eingeschoben wurde oder die Garraumtür hierzu geöffnet wird, durch die Türsensoren und ggf. durch zusätzliche Sensoren im Gerät detektiert werden. Bei einem Kochfeld kann die Nutzeraktion z.B. darin bestehen, dass ein Topf, eine Pfanne oder ein anderes Gargefäß oder ein über das Kochfeld mit Energie zu versorgendes weiteres Gerät auf das Kochfeld gestellt oder seine Position verändert wird. Der folgende Sprachbefehl kann z.B. das gewünschte Garprogramm enthalten.

Es ist auch eine Kombination mit anderen Systemen zur Vereinfachung der Bedienung möglich. Z.B. kann ein System zur Erkennung von in das Gerät geschobenen Lebensmitteln aus einem Kamerabild oder anderen Sensorsystemen einen Vorschlag für ein Garprogram erstellen. Wenn mit dem Erscheinen des Vorschlags die Sprachsteuerung aktiviert wird, kann dieser Vorschlag per Spracheingabe des Benutzers akzeptiert, ergänzt oder verworfen werden. Wenn durch das Lebensmittelerkennungssystem mehrere Möglichkeiten vorgeschlagen werden, kann eine Auswahl mittels Sprachsteuerung erfolgen.

Ein anderes Beispiel für eine potentielle automatische kurze Aktivierung der Sprachsteuerung ist das Schließen eines Deckels auf einer Küchenmaschine. Wenn z.B. direkt auf diese Bedienhandlung eines bestimmungsgemäßen Gebrauchs folgend eine Zahl vom Benutzer genannt wird, kann diese von der Sprachsteuerung als Geschwindigkeitsstufe ausgewertet und an die Küchenmaschine gesendet werden. Alternativ oder zusätzlich können auch Temperatur oder Timer auf diese Art und Weise eingestellt werden.

Gemäß einem weiteren Aspekt der Erfindung erfolgt die Bedienung des Geräts durch den Benutzer berührend oder berührungslos. Somit können jeweils die verschiedenen sensorischen sowie sonstigen Möglichkeiten zur Bedienung des Geräts verwendet werden, um zusätzlich oder alternativ zu einer Handlung des Benutzers die Sprachsteuerung zu aktivieren.

Beispielsweise kann sich die Hand des Benutzers nach dem Schließen eines Einbaugeräts im oberen Bereich der Klappe bzw. vor der Blende des Geräts befinden. Es kann sich daher anbieten, eine Aktion in diesem Bereich des Geräts für die Aktivierung der Sprachsteuerung zu definieren. Dabei kann es sich z.B. um eine tastsensitive Fläche an der Tür oder an der Bedienblende handeln, welche der Benutzer einfach mit dem im Kochprozess häufig relativ sauberen Handrücken berühren kann. Wenn diese Fläche relativ groß gestaltet ist, ist eine Bedienung aus der fließenden Bewegung einfacher möglich als bei einer kleinen Sensortaste. Alternativ zu einer Detektion einer Berührung der Fläche kann auch ein kapazitiver Sensor, ein IR-Sensor, eine Kamera, ein Ultraschallsensor oder eine ähnliche berührungsfreie Sensortechnik eingesetzt werden, um die Betätigung der Sensorfläche durch den Benutzer zu detektieren. Alternativ zu der größeren Fläche ist natürlich auch eine klassische Sensortaste möglich.

Es können auch Sensoren verwendet werden, welche sonstige im Normalfall nicht auftretenden Handlungen, d.h. über einen bestimmungsgemäßen Gebrauch des Geräts hinausgehende Handlungen, detektieren. Ein Beschleunigungssensor und bzw. oder ein Mikrophon kann z.B. ein Klopfen, ggf. ein mehrfaches Klopfen, des Benutzers an das Gerät detektieren und als Aktivierungssignal der Sprachsteuerung nutzen.

Alternativ zu einem Sensor z.B. in der Tür oder in der Bedienblende kann auch ein Sensor im Griff eines Geräts integriert werden. Hier kann sich z.B. eine Seitenfläche und bzw. oder ein Bereich an dem oder den Enden des Griffs als Sensorflächen anbieten, da diese leicht von einer Hand des Benützers erreicht werden können, jedoch bei normalem Gebrauch nicht angefasst werden. Neben einer Detektion einer Berührung einer sensitiven Fläche des Griffs kann auch eine Kraftmessung, eine Drehmomentmessung sowie eine Messung einer Translations- und bzw. oder Rotationsbewegung als zu detektierendes Signal genutzt werden. Wenn die Aufhängung des Griffs flexibel ist, folgt aus der auf den Griff ausgeübten Kraft eine ggf. minimale Bewegung des Griffs, welche durch geeignete Maßnahmen detektiert werden kann. Wird beispielsweise eine Kraft seitlich auf den Griff ausgeübt, so kann dies von einem Sensor detektiert und an eine Steuereinheit des Geräts als Aktivierungssignal für die Sprachsteuerung gesendet werden. Bei dieser Kraft kann es sich z.B. um ein seitliches Antippen des Griffs durch den Benutzer handeln. Durch ein Antippen auf der einen und der anderen Seite des Griffs können zwei verschiedene Signale erzeugt werden, um z.B. die Sprachsteuerung zu aktivieren und zu deaktivieren.

Gemäß einem weiteren Aspekt der Erfindung ist die Bedienung des Geräts durch den Benutzer eine Annährung des Benutzers an das Gerät. Auf diese Weise kann, falls das Gerät z.B. über einen Näherungssensor verfügt, auch eine Annäherung des Benutzers an das Gerät die Sprachsteuerung aktivieren. Alternativ oder zusätzlich kann eine Annährung des Benutzers an das Gerät auch mittels einer Bilderfassung erkannt und zur Aktivierung der Sprachsteuerung verwendet werden. Hierbei kann insbesondere eine Erkennung des Gesichts des Benutzers erfolgen, so dass ein nahes Vorbeigehen des Benutzers an dem Gerät von einer Blickrichtung des Benutzers zum Gerät hin unterschieden und so eine ungewollte Aktivierung der Sprachsteuerung vermieden werden kann.

Gemäß einem weiteren Aspekt der Erfindung erfolgt das Erfassen einer Bedienung des Geräts von dem Benutzer mittels eines modularen und bzw. oder energieautarken Sensors. Die Verwendung eines modularen Sensors kann eine Nachrüstung ermöglichen bzw. erleichtern. Auch kann zum Ermöglichen bzw. zum Erleichtern einer Nachrüstung ein autarkes System mit einer Energieversorgung mittels Energy Harvesting oder Batterie bzw. Akku verwendet werden. Das Energy Harvesting kann z.B. mittels Solarzelle oder durch die Energiegewinnung aus den Temperaturdifferenzen zwischen dem im Betrieb warmen inneren Bereich des Griffs bzw. der Glasscheibe und der relativ kalten vom Gerät abgewandten Seite erfolgen. Auch kann eine Energiegewinnung aus der Bewegung z.B. der Tür des Geräts verwendet werden. Die Datenübermittlung kann über eine drahtlose Verbindung wie z.B. BTLE oder WiFi erfolgen. Alternativ sind für Energieversorgung und bzw. oder Kommunikation auch drahtgebundene Lösungen möglich. Teile der Verdrahtung können durch leitfähige Beschichtungen auf z.B. der Tür ermöglicht werden.

Gemäß einem weiteren Aspekt der Erfindung weist das Verfahren wenigstens den weiteren Schritt nach dem Aktivieren der Sprachsteuerung auf:
- Anzeigen der aktivierten Sprachsteuerung durch das Gerät.

Die Aktivierung der Sprachsteuerung kann dem Benutzer am Gerät und bzw. oder an einer separaten Komponente der Sprachsteuerung akustisch und bzw. oder optisch und bzw. oder haptisch angezeigt werden. Für diese Anzeige können speziell zu diesem Zweck vorhandene Anzeigeelemente wie z.B. hinterleuchtete Symbole, Symbole auf einem Display oder Text auf einem Display und dergleichen genutzt werden. Alternativ oder zusätzlich kann eine Ansteuerung von für andere Zwecke vorgesehenen Bauelementen wie z.B. die Garraumbeleuchtung genutzt werden, um die Aktivität der Sprachsteuerung z.B. durch Farbvariation, durch Blinken bei Aktivierung bzw. bei Deaktivierung anzuzeigen. Alternativ oder zusätzlich kann z.B. ein kurzes Vibrieren eines Griffs des Geräts als haptische Anzeige der Aktivierung der Sprachsteuerung verwendet werden.

Gemäß einem weiteren Aspekt der Erfindung weist das Verfahren wenigstens den weiteren Schritt nach dem Erfassen einer Spracheingabe des Benutzers auf:
- Ausgeben einer Rückmeldung auf die erkannte Spracheingabe des Benutzers.

Auf diese Art und Weise kann dem Benutzer eine Rückmeldung seitens der Sprachsteuerung gegeben werden, was als Spracheingabe des Benutzers bzw. ob die gewünschte Spracheingabe des Benutzers von der Sprachsteuerung zutreffend erkannt wurde. Das Ergebnis der Spracherkennung der Sprachsteuerung kann dem Benutzer angezeigt werden, wozu z.B. ein Display oder Symbole am Gerät genutzt werden können, z.B. durch den Hinweis: "Automatikprogramm Kartoffeln". Alternativ oder zusätzlich ist auch eine akustische Ausgabe des erkannten Befehls seitens der Sprachsteuerung möglich, indem der Inhalt der Spracheingabe des Benutzers wiederholt oder eine entsprechende Bestätigung als Sprachausgabe verwendet wird.

Es ist auch möglich, vor der Ausführung des erkannten Sprachbefehls eine Bestätigung des Benutzers durch eine weitere Spracheingabe oder durch eine andere Eingabe erforderlich zu machen. Diese Bestätigung kann je nach Gerät und Befehl zwingend, optional oder nicht vorhanden sein. Beispielsweise kann das Ausschalten des Geräts oder eine Temperaturverringerung dem Benutzer nur zurückgemeldet werden, muss aber nicht bestätigt werden. Das Anschalten oder eine signifikante Temperaturerhöhung jedoch muss bestätigt werden.

Gemäß einem weiteren Aspekt der Erfindung erfolgt das Ausführen einer Bedienung des Geräts durch die Sprachsteuerung mit einem vorbestimmten zeitlichen Verzug. Mit anderen Worten kann vor der Ausführung des Sprachbefehls eine Wartezeit eingefügt werden, um dem Benutzer im Falle einer fehlerhaften Spracherkennung seines Sprachbefehls die Möglichkeit zum Abbruch bzw. zur Korrektur zu geben. Das Maß des vorbestimmten zeitlichen Verzugs kann allgemein vorgegeben sein oder von dem zu bedienenden Gerät, von der Bedienung des Geräts und bzw. oder von der Spracheingabe des Benutzers abhängen. Beispielsweise kann der Befehl "Gerät aus" sofort ausgeführt werden, während der Befehl, "220°C Umluft" erst nach einer Wartezeit von einigen Sekunden umgesetzt wird.

Gemäß einem weiteren Aspekt der Erfindung weist das Verfahren wenigstens den weiteren Schritt nach dem Erfassen einer Spracheingabe des Benutzers auf:
- Ausgeben einer Information und bzw. oder Anweisung an ein weiteres Gerät.

Auf diese Art und Weise können auch weitere Systeme beteiligt werden, welche die Information und bzw. oder die Anweisung nutzen können. So kann die Information der Sprachsteuerung, welche aus der Bedienung des Geräts durch den Benutzer in Kombination mit der Spracheingabe des Benutzers gewonnen wurde wie z.B. "das Kartoffelprogramm wird auf der Kochzone hinten links gestartet" nicht nur an das Kochfeld, sondern parallel auch an ein System zur Kochassistenz z.B. auf einem Tablet bzw. in einer Cloud gesendet werden, welches aufgrund dieser Information und bzw. oder Anweisung den nächsten Schritt im Kochprozess anzeigen kann. Die Weitergabe der Information und bzw. oder Anweisung kann durch das Gargerät, durch die Sprachsteuerung oder durch eine zentrale Instanz erfolgen.

Dies kann beispielweise wie folgt ablaufen: Auf einem Tablet ist in einer App eine Schritt-für-Schritt-Anleitung mit mehreren in Einbaugargeräten zu garenden Lebensmitteln offen. Es sind zwei Einbaugargeräte vorhanden. Der Benutzer schiebt ein Lebensmittel in das erste Einbaugargerät und aktiviert durch eine Berührung die mit dem ersten Einbaugerät verbundene Sensoreinheit am Griff des ersten Einbaugeräts. Das erste Einbaugerät sendet daraufhin den Befehl "Spracherkennung aktivieren" an ein externes Gerät der Sprachsteuerung bzw. aktiviert die eingebaute Sprachsteuerung des ersten Einbaugeräts selbst. Dem Benutzer wird durch kurzes Aufblinken der Garraumbeleuchtung angezeigt, dass die Spracherkennung der Sprachsteuerung des ersten Einbaugeräts aktiv ist. Der Benutzer sagt "Braten". Die Sprachsteuerung erkennt den Befehl "Braten" und sendet ihn an das erste Einbaugerät zur Umsetzung.

Wenn kein System zur Kochassistenz vorhanden ist, schlägt das erste Einbaugerät dem Benutzer mehrere Optionen zur Zubereitung eines Bratens im ersten Einbaugerät vor, z.B. Automatikprogramme, Größe des Bratens, Fleischsorte und dergleichen. Ist ein Assistenzsystem vorhanden, wird die Information "Braten" vom ersten Einbaugerät an das Assistenzsystem geschickt. Das Assistenzsystem antwortet mit den im aktiven Rezept hinterlegten Parametern für den Garprozess des Rinderbratens. Das erste Einbaugerät zeigt je nach Konfiguration diese Parameter zur Bestätigung durch den Benutzer diesem an oder startet das Garprogramm mit diesen Parametern direkt. Das Assistenzsystem integriert nach der Rückmeldung des ersten Einbaugeräts bzgl. des Starts des Garprozesses die Anzeige des gestarteten Garprozesses mit einem ablaufenden Timer und der Angabe des verwendeten Einbaugeräts in seine Benutzerführung. Da durch die Aktivierung der Spracheingabe am ersten Einbaugerät die Information, welches Einbaugerät verwendet wird, vorliegt, kann eine Auswahl des Einbaugeräts im Assistenzsystem entfallen.

Gemäß einem weiteren Aspekt der Erfindung weist das Verfahren wenigstens den weiteren Schritt nach dem Ausführen einer Bedienung des Geräts durch die Sprachsteuerung auf:
- Deaktivieren der aktivierten Sprachsteuerung durch das Gerät.

Auf diese Art und Weise kann die aktivierte Sprachsteuerung seitens des Gerätes wieder deaktiviert werden, um die Funktionen der Sprachsteuerung wie zuvor beschrieben jedoch nicht unnötiger Weise darüber hinaus zu nutzen bzw. zur Verfügung zu stellen. Insbesondere kann die Sprachsteuerung durch das Gerät wieder deaktiviert werden, sobald die Bedienung des Geräts durch die Sprachsteuerung gemäß der erkannten Information und bzw. oder der erkannten Anweisung ausgeführt bzw. veranlasst wurde. Auch kann die Sprachsteuerung lediglich für die Zeitdauer der Bedienung durch den Benutzer, z.B. nur während der Dauer einer Berührung einer bestimmten Fläche an der Bedienblende oder dem Griff eines Einbaugeräts durch den Benutzer, aktiv sein.

Auf diese Art und Weise kann erreicht werden, dass die Sprachsteuerung nicht länger als erforderlich betrieben wird. Dies kann z.B. die erforderlichen Kapazitäten zur Datenübertragung innerhalb des Geräts bzw. vom Gerät zur Sprachsteuerung und zurück gering halten. Auch kann die Datenverarbeitung der Sprachsteuerung gering gehalten werden. Dies kann insbesondere bei einer Sprachsteuerung, welche nicht nur dem zu bedienenden Gerät, sondern auch anderen Geräten zur Verfügung steht, den Datenverkehr der drahtlosen oder drahtgebundenen Datenübertragung gering halten. Insbesondere kann vermieden werden, dass weitere Sprachausgaben des Benutzers von der Sprachsteuerung erfasst werden und seitens der Sprachsteuerung versucht wird, diese zu erkennen und ggfs. hierauf basierend weitere Befehle auszuführen bzw. beim Benutzer nach Bestätigungen der Befehle anzufragen. Dies kann zu fehlerhaften Bedienungen führen bzw. vom Benutzer als störend empfunden werden.

Gemäß einem weiteren Aspekt der Erfindung weist das Verfahren wenigstens den weiteren Schritt nach dem Ausführen einer Bedienung des Geräts durch die Sprachsteuerung auf:
- Beibehalten der aktivierten Sprachsteuerung für eine vorbestimmte Zeitdauer.

Mit anderen Worten kann die Dauer der Aktivierung der Spracherkennung der Sprachsteuerung eine vorgegebene Zeitdauer haben. Auf diese Weise kann die Spracherkennung der Sprachsteuerung durch den Benutzer aktiviert werden und dem Benutzer auch danach noch für die vorbestimmte Dauer zur Verfügung stehen, ohne dass der Benutzer z.B. eine bestimmte Fläche an der Bedienblende oder dem Griff eines Einbaugeräts durchgehend berühren muss. Dies kann dem Benutzer die Spracheingabe erleichtern bzw. den Komfort der Bedienung erhöhen.

Gemäß einem weiteren Aspekt der Erfindung weist das Gerät die Sprachsteuerung auf. Mit anderen Worten kann die Sprachsteuerung in dem zu bedienenden Gerät als Einheit und bzw. oder als Software integriert sein. Dies kann die Datenübertragung vereinfachen. Auch kann die Sprachsteuerung gezielt auf die Funktionen, Programme, Parameter etc. ausgelegt sein, welche überhaupt an dem Gerät vorgenommen werden können. Dies kann die Sprachsteuerung vereinfachen.

Gemäß einem weiteren Aspekt der Erfindung ist die Sprachsteuerung unabhängig von dem Gerät. Mit anderen Worten stellt die Sprachsteuerung z.B. als sprachgesteuerter persönlicher Assistent ein separates Gerät dar, welches vielseitig zur Spracherkennung verwendet werden und als eine seiner Funktionen durch Zusammenwirken mit dem zu bedienenden Gerät das erfindungsgemäßen Verfahren ausführen kann. Hierdurch kann eine Sprachsteuerung für mehrere Geräte bzw. für mehrere Anwendungen genutzt werden, was die Anzahl der verschiedenen Sprachsteuerungen für mehrere Geräte z.B. in einem Haushalt reduzieren kann.

Mit anderen Worten kann die Spracherkennung bzw. die Sprachauswertung mittels eines externen Geräts z.B. mit einem Amazon Echo, einem HomePod, mit google home und dergleichen erfolgen. Wenn ein externes Gerät genutzt wird, kann die Kommunikation über das Gerät oder direkt zwischen z.B. einem Sensor mit Funkmodul im Griff des zu bedienenden Geräts und einem externen Gerät der Sprachsteuerung erfolgen. Alternativ kann die Kommunikation über das zu bedienende Gerät an das externe Gerät weitergeleitet werden. In diesem Fall kann das zu bedienende Gerät als Übersetzer bzw. als Mittler zwischen der Sensoreinheit und verschiedenen externen Geräten zur Sprachsteuerung mit unterschiedlichen Protokollen fungieren.

Dies kann beispielsweise wie folgt erfolgen: Ein Einbaugerät ist mit einem Gerät zur Sprachsteuerung signalübertragend verbunden. Das Einbaugerät weist ein Sensorelement im Griff einer Garraumtür auf, welches eine drahtlose Kommunikation mittels eines ersten Funkstandard und eines ersten Protokolls ermöglicht. Das Einbaugerät kann nun eine Protokollübersetzung von dem ersten Protokoll in ein zweites Protokoll durchführen sowie eine drahtlose Kommunikation mittels eines zweiten Funkstandard zu dem Gerät zur Spracherkennung durchführen, um die Daten des Sensorelements in dem zweiten Protokoll an das Gerät zur Spracherkennung zu übertragen. Sollen die Daten des Sensorelements an ein anderes Gerät zur Spracherkennung mittels eines dritten Protokolls und eines dritten Funkstandards übertragen werden, so kann auch diese Übersetzung von dem Einbaugerät geleistet werden.

Gemäß einem weiteren Aspekt der Erfindung ist das Gerät ein Haushaltsgerät, vorzugsweise ein Küchengerät. Auf diese Art und Weise können die zuvor beschriebenen Eigenschaften und Vorteile in einem Haushalt genutzt werden, insbesondere in Kombination mit einem eingangsbeschriebenen sprachgesteuerten persönlichen Assistenten. Insbesondere können neben den bereits erwähnten Haushalts- bzw. Küchengeräten wie Kochfeld, Dampfgarer, Backofen, Mikrowelle auch andere Haushaltsgeräte wie z.B. Kühlschrank, Geschirrspüler, Waschmaschine, Trockner, Dunstabzugshaube und dergleichen erfindungsgemäß verwendet werden.

Gemäß einem weiteren Aspekt der Erfindung wird durch den Schritt des Aktivierens eine Mehrzahl von Sprachsteuerungen durch das Gerät aktiviert und durch den Schritt des Erfassens wird eine Spracheingabe des Benutzers durch wenigstens eine Sprachsteuerung der Mehrzahl von Sprachsteuerungen erfasst.

Diesem Aspekt der Erfindung liegt die Erkenntnis zugrunde, dass in einem Haushalt mehrere Sprachsteuerungen wie z.B. mehrere Tablets, Smartphones sowie Sprachassistenten und dergleichen vorhanden sein können. Diese Sprachsteuerungen bzw. Spracheingabegeräte können einem Raum oder einem oder mehreren zu bedienenden Gerät(en) fest zugeordnet sein, was üblicherweise aufgrund der hieraus resultierenden Inflexibilität für den täglichen Gebrauch nicht der Fall sein wird. Zwar könnte z.B. eine eher stationär anzuwendende Sprachsteuerung wie z.B. eine Alexa grundsätzlich z.B. in der Küche verwendet werden. Als Beispiel: Kochfeld, Backofen, Dampfgarer und Dunstabzugshaube greifen gemeinsam auf einen Sprachassistenten in der Küche zu. Im Gegensatz dazu sind Waschmaschine und Trockner einem anderen Sprachassistenten im Hauswirtschaftsraum zugeordnet.

Mobile Sprachsteuerungen wie z.B. Tablets oder Smartphones werden jedoch üblicherweise innerhalb eines Haushalts in verschiedenen Räumen sowie außerhalb eines Haushalts verwendet. Diese wären z.B. beim Betreten der Küche vom Benutzer dieser oder einem Küchengerät zuzuordnen und beim Verlassen der Küche wieder vom Benutzer dort abzumelden, was einen zusätzlichen Aufwand für den Benutzer erfordern würde und daher als störend empfunden werden könnte. Auch könnte eine eher stationär anzuwendende Sprachsteuerung in einen anderen Raum versetzt werden, ohne diese vom bisherigen Raum abzumelden und im neuen Raum anzumelden, was den Schritt des Erfassens einer Spracheingabe des Benutzers durch diese Sprachsteuerung erschweren oder verhindern könnte.

Gemäß dem vorliegenden Aspekt der Erfindung könnte daher ein flexiblerer Lösungsansatz darin bestehen, alle Sprachsteuerungen, welche z.B. einem Haushalt zugeordnet sind und sich z.B. in demselben WLAN-Netzwerk befinden, seitens des zu bedienenden Geräts zu aktivieren und auf einen ausführbaren Befehl zu warten. Hierdurch könnten die zuvor beschriebenen Nachteile vermieden oder zumindest reduziert werden. Gleichzeitig könnte auf eine Zuordnung von Sprachsteuerungen zu einem zu bedienenden Gerät bzw. zu einem Bereich des Haushalts wie z.B. zur Küche verzichtet werden, was eine Beeinträchtigung des Komforts für den Benutzer vermeiden könnte.

Dabei kann zur Erhöhung der Zuverlässigkeit der Spracherkennungen der mehreren Sprachsteuerungen wie z.B. Siri auf dem Smartphone, Amazon Alexa Cloudservice mit Anbindung an ein Mikrofon in einem Küchengerät und Google Home Nest Hub, welche gezielt parallel aktiviert und betrieben werden können, die jeweiligen Ergebnisse der Spracherkennung z.B. in einer Cloud oder in dem zu bedienenden Gerät zusammengeführt werden. Die Zuordnung der erfassten Spracheingaben mehrerer Sprachsteuerungen zu ggfs. mehreren zu bedienenden Geräten kann durch weiter unten zu beschriebene Mechanismen erfolgen.

Bei der Zusammenführung der Ergebnisse der Spracherkennung derselben erfassten Spracheingabe des Benutzers durch mehrere Sprachsteuerungen kann eine Plausibilisierung erfolgen indem überprüft wird, ob die erkannten Informationen und bzw. oder Anweisungen den gleichen oder zumindest einen ähnlichen Inhalt besitzen. Falls es zu Abweichungen kommt, kann mit verschiedenen Strategien gearbeitet werden. So kann der Sprachbefehl zurückgewiesen und der Benutzer aufgefordert werden, seine Spracheingabe zu wiederholen. Es kann jedoch auch die Information und bzw. oder Anweisung nach einem Mehrheitsentscheid ausgewählt werden, wenn wenigstens zwei Sprachsteuerungen dieselbe Information und bzw. oder Anweisung aus der jeweils erfassten Spracheingabe erkannt haben. Es kann auch eine Gewichtung der Ergebnisse der jeweils erfassten Spracheingabe mit der bisherigeren Trefferwahrscheinlichkeit der abweichenden Sprachsteuerungen erfolgen. Ferner können unterschiedliche Strategien je nach Risikopotential der erkannten Informationen und bzw. oder Anweisungen verfolgt werden. So kann z.B. ein Kochfeld nur bei eindeutiger Übereinstimmung der verfügbaren Sprachsteuerungen eingeschaltet bzw. in der Leistung erhöht werden, die Beleuchtung eines Dunstabzugs jedoch auch bei Uneinigkeit der Sprachsteuerungen mit Tendenz in Richtung der ungefährlichen Information und bzw. oder Anweisung.

Gemäß einem weiteren Aspekt der Erfindung werden durch den Schritt des Erfassens mehrere Spracheingaben mehrerer Benutzer durch jeweils wenigstens eine Sprachsteuerung erfasst und durch den Schritt des Erkennens einer Information und bzw. oder Anweisung in den erfassten Spracheingaben der Benutzer wird durch jeweils wenigstens eine Sprachsteuerung die Information und bzw. oder Anweisung als solche erkannt oder verworfen.

Diesem Aspekt der Erfindung liegt der Gedanke zugrunde, dass durch das zuvor beschriebene Aktivieren mehrerer Sprachsteuerungen auch Spracheingaben von Benutzern erfasst werden können, welche gar nicht der Bedienung des zu bedienenden Geräts dienen. Daher kann erfindungsgemäß der Inhalt aller erfassten Spracheingaben ausgewertet und insbesondere im Kontext des zu bedienenden Geräts erkannt werden, welche erfassten Spracheingaben der Bedienung des zu bedienenden Geräts dienen und welche nicht. So kann beispielsweise bei einer erfassten Spracheingabe des Begriffs "Bunt-wäsche" aus dem Kontext erkannt werden, dass eine entsprechende Umsetzung dieses Begriffs als Anweisung z.B. bei einer Waschmaschine erfolgen kann, jedoch nicht bei einem Dampfgarer oder bei einer Kochstelle.

Wird beispielsweise eine bestimmte Kochstelle eines Kochfelds seitens des dort angeordneten Gargeschirrs aktiviert, kann hieraus erkannt werden, dass zur Auswahl der Leistungsstufe dieser Kochstelle ein Zahlenwert als erfasste Spracheingabe zu erwarten ist. Werden nun Worte aus den erfassten Spracheingaben aller aktivierter Sprachsteuerungen erkannt, welche keine Zahlenwerte sind, so können diese verworfen bzw. ignoriert werden. Nur der erste erfasste Zahlenwert stellt somit eine gültige erfasste Spracheingabe dar und wird zum Ausführen einer Bedienung des Geräts durch die Sprachsteuerung gemäß der erkannten Information und bzw. oder Anweisung verwendet.

Zusätzliche Ansätze für das Problem der Sicherheit gegen eine Verwechselung von Spracheingaben bei zeitlich naheliegenden Spracheingaben an unterschiedlichen Sprachsteuerungen können beinhalten, dass falls mehrere Informationen und bzw. oder Anweisungen zeitlich nahe zusammen von mehreren Sprachsteuerungen erfasst werden, z.B. ein Sicherheitsmodus mit zusätzlichen Sicherheitsregeln aktiviert werden kann. Dies können zusätzliche Prüfungen bzw. Bestätigungsabfragen bei potentiell schadensträchtigen Anweisungen wie z.B. bei einer Veränderung der Leistung z.B. einer Kochstelle oder zusätzliche Plausibilitätsprüfungen sein, bei denen das Risiko einer fehlerhaften Zurückweisung der Anweisung besteht und welche aus diesem Grund normalerweise nicht aktiviert sind.

So können beide Informationen und bzw. oder Anweisungen auf Plausibilität geprüft werden. Wenn eine der beiden Informationen und bzw. oder Anweisungen nicht plausibel ist, kann die nicht plausible Information und bzw. oder Anweisung zurückgewiesen werden.

Auch kann eine Erkennung des zu bedienenden Geräts durch die Betrachtung der Historie der Informationen und bzw. oder Anweisungen, durch den Verbindungsaufbau einer kurzreichweitigen Funkverbindung wie z.B. Bluetooth, durch Signalstärkemessungen, durch ein nicht hörbares Signal sowie durch verschiedene Kombinationen hiervon erfolgen, wie weiter unten noch näher beschrieben werden wird.

Gemäß einem weiteren Aspekt der Erfindung werden die erfassten Spracheingaben einer Sprachsteuerung vorrangig gegenüber den erfassten Spracheingaben der wenigstens einen weiteren Sprachsteuerung behandelt.

Diesem Aspekt der Erfindung liegt die Erkenntnis zugrunde, dass durch das Erfassen mehrerer Spracheingaben mehrerer Benutzer durch jeweils wenigstens eine Sprachsteuerung wie zuvor beschrieben zum einen unbeabsichtigt Gespräche als erfasste Spracheingaben von der Sprachsteuerung aufgezeichnet werden können, was die Privatsphäre der Benutzer verletzen kann. Zum anderen können Inhalte derartiger Gespräche irrtümlich als Befehl verstanden werden, was die Sicherheit des zu bedienenden Geräts beeinflussen kann. Wird beispielsweise wie zuvor beschrieben ein Zahlenwert zur Einstellung einer Leistungsstufe einer Kochstelle als erfasste Spracheingabe erwartet, in diesem Moment jedoch z.B. im Kinderzimmer ein Zahlenwert von einer dort befindlichen Sprachsteuerung erfasst, so könnte die erfasste Spracheingabe im Kinderzimmer ungewollt zur Einstellung der Leistungsstufe der Kochstelle in der Küche führen.

Eine weitere potentielle Fehlerquelle derartiger mehrerer erfasster Spracheingaben kann darin liegen, dass zwei Sprachsteuerungen nahezu gleichzeitig aktiviert werden könnten. In diesem Fall kann die Zuordnung zweier erfasster Spracheingaben durch zeitliche Überschneidungen fehlerhaft sein, wenn einfach nur auf das Timing der erfassten Spracheingaben geachtet wird. Wird, um bei dem vorherigen Beispiel zu bleiben, etwa zeitgleich ein Zahlenwert in der Küche und in dem Kinderzimmer ausgesprochen und als Spracheingabe jeweils von einer Sprachsteuerung erfasst, so kann fälschlicherweise der im Kinderzimmer ausgesprochene Zahlenwert zur Bedienung der Kochstelle verwendet werden, falls diese erfasste Spracheingabe zuerst erfasst und ausgewertet wird.

Die einfachste Möglichkeit dies zu unterbinden könnte darin bestehen, dass die Funktion der Spracherkennung für alle anderen Sprachsteuerungen im Netzwerk bzw. im Haushalt deaktiviert wird, wenn ein zu bedienendes Gerät im Haushalt durch eine Sprachsteuerung bedient werden soll. Dies könnte von den Benutzern der übrigen Sprachsteuerungen jedoch als Einschränkung und damit als störend empfunden werden, insbesondere, falls das zu bedienende Gerät z.B. als Kochstelle oder als Kochfeld zur Zubereitung eines Gerichts mit mehreren Zutaten über einen längeren Zeitraum sprachgesteuert werden soll. In dieser Zeit stünde z.B. eine Alexa nicht zum Beantworten von Fragen, zum Abspielen von Musik und dergleichen zur Verfügung. Insbesondere ist perspektivisch davon auszugehen, dass zunehmend eine Vielzahl von zu bedienenden Geräten in ein System von Sprachsteuerungen eingebunden werden wird. Damit würde auch die Anzahl der Kollisionen wie zuvor beschrieben steigen, was von den Benutzern als störend wahrgenommen werden könnte.

Gemäß diesem Aspekt der Erfindung können daher zwar alle Sprachsteuerungen aktiviert und die erfassten Spracheingaben zunächst in einem Zwischenspeicher hinterlegt werden. Jedoch kann eine Sprachsteuerung z.B. aufgrund der Historie der bereits erfassten und umgesetzten Spracheingaben als sozusagen primäre Sprachsteuerung vorrangig gegenüber der wenigstens einen weiteren Sprachsteuerung ausgewertet werden. Erst wenn bei der primären Sprachsteuerung keine ausführbare Handlungsanweisung erfasst wird, werden die erfassten Spracheingaben der wenigstens einen weiteren Sprachsteuerung berücksichtigt.

Diese Zuordnung kann sowohl in dem Fall, dass durch die Bedienung eines Geräts mehrere Sprachsteuerungen aktiviert werden, als auch für den Fall, dass wenigstens zwei Geräte bedient und hierdurch nacheinander jeweils mehrere Sprachsteuerungen aktiviert werden, genutzt werden. Die automatische Zuordnung zwischen Sprachsteuerung und zu bedienendem Gerät kann z.B. über die letzte eindeutig zugeordnete Information und bzw. oder Anweisung erfolgen. So kann z.B. die Sprachsteuerung, über welche die letzte eindeutig zugeordnete Information und bzw. oder Anweisung für ein Garprogramm für den Dampfgarer als zu bedienendes Gerät erfasst wurde, als primäres Gerät für eine Spracheingabe nach einem Trigger durch den Dampfgarer verwendet werden.

Gemäß einem weiteren Aspekt der Erfindung ist bzw. sind eine Mehrzahl von Geräten und bzw. oder eine Mehrzahl von Sprachsteuerungen vorhanden, wobei ein Gerät einer Sprachsteuerung zugeordnet ist. Diese Zuordnung kann insbesondere durch eine feste Vorgabe erfolgen, welche vom Benutzer am Gerät und bzw. oder an der Sprachsteuerung vorgenommen und vorzugsweise auch wieder geändert werden kann.

Diesem Aspekt der Erfindung liegt die Erkenntnis zugrunde, dass z.B. nahe beieinander befindliche zu bedienende Geräte mit ähnlichen Fähigkeiten wie z.B. ein Dampfgarer und ein Backofen weder aufgrund ihrer Funktionen noch über die erfassten Spracheingaben eindeutig unterschieden werden können. So können jeweils Temperatureinstellungen in einem vergleichbaren Temperaturbereich sowie vergleichbare Garfunktionen bzw. Garprogramme von diesen Geräten umgesetzt werden. Werden somit beide Geräte zeitgleich innerhalb der Küche mittels einer gemeinsamen Sprachsteuerung oder auch mit mehreren Sprachsteuerungen verwendet bzw. bedient, so kann z.B. die erfasste Spracheingabe eines Zahlenwerts als Anweisung einer Gartemperatur von jedem Gerät umgesetzt und daher ggfs. nicht eindeutig dem Dampfgarer oder dem Backofen zugeordnet werden können.

Zwar ist in diesem Fall eine gleichzeitige Aktivierung von Dampfgarer und Backofen sehr unwahrscheinlich und würde leicht als Nutzerfehler gewertet werden können, da hierfür zwei Benutzer nebeneinanderstehen müssten, im Sichtfeld des jeweils anderen die Sprachfunktion durch eine Handlung aktivieren müssten und sich mit ihren Sprachbefehlen gegenseitig ins Wort fallen würden. Dennoch kann das verbleibende Restrisiko eines derartigen Szenarios dadurch verringert oder sogar ausgeschlossen werden, indem eine Sprachsteuerung wie z.B. die Alexa in der Küche z.B. dem Dampfgarer als zu bedienendes Gerät fest zugeordnet ist und eine weitere Sprachsteuerung wie z.B. ein Smartphone des Benutzers z.B. dem Backofen als weiteres zu bedienendes Gerät fest zugeordnet ist oder dem Backofen gar keine Sprachsteuerung zugeordnet wird. Hierdurch können erfasste Spracheingaben in der Küche seitens der Alexa eindeutig dem Dampfgarer zugeordnet werden während der Backofen mittels des Smartphones des Benutzers sprachgesteuert oder vom Benutzer ohne Sprachsteuerung bedient werden kann.

Dies kann für eine eindeutige Zuordnung der erfassten Spracheingaben sorgen, auch wenn mehrere Geräte und bzw. oder mehrere Sprachsteuerungen vorhanden sind. Insbesondere kann das unbeabsichtigte Erfassen von Gesprächen in anderen Räumen vermieden werden, wie dies der Fall sein könnte, falls mehrere Sprachsteuerungen von dem zu bedienenden Gerät aktiviert werden würden, wie zuvor beschrieben, auch wenn dies andere Vorteile bieten kann, wie zuvor beschrieben.

Andererseits kann diese feste Zuordnung von zu bedienendem Gerät zu einer Sprachsteuerung einen zusätzlichen Aufwand für den Benutzer bedeuten, wie zuvor beschrieben. Dies kann jedoch durch die entsprechenden Vorteile wie eine Erhöhung der Bediensicherheit und bzw. oder eine Erhöhung der Privatsphäre gerechtfertigt bzw. dem Benutzer den zusätzlichen Aufwand wert sein.

Gemäß einem weiteren Aspekt der Erfindung erfolgt zwischen den einander zugeordneten Gerät und Sprachsteuerung eine Abstandserkennung, wobei wenigstens das Aktivieren der Sprachsteuerung durch das Gerät lediglich dann erfolgt, falls die einander zugeordneten Geräte und Sprachsteuerungen als sich innerhalb eines vorbestimmten Abstands zu einander befindend erkannt werden.

Diesem Aspekt der Erfindung liegt die Überlegung zugrunde, dass falls die Sprachsteuerung z.B. aus der Küche wegbewegt und z.B. im Kinderzimmer aufgestellt wird, die Sprachsteuerung im Kinderzimmer aktiviert und der dort gesprochene Text erfasst werden kann. Dies kann zum einen die Privatsphäre im Kinderzimmer stören. Zum anderen können die im Kinderzimmer erfassten Spracheingaben zur Bedienung z.B. einer Kochstelle in der Küche verwendet werden, falls diese Sprachsteuerung dem Kochfeld zugeordnet ist. Dies kann zur Ausgabe von Fehlermeldungen in der Küche oder zur Bedienung des Kochfelds führen, was die Sicherheit beeinträchtigen kann. Ferner kann eine Bedienung des Kochfelds in der Küche mittels Spracheingaben nicht erfolgen, da die entsprechend zugeordnete Sprachsteuerung außerhalb der Reichweite des sich in der Küche befindenden Benutzers ist.

Daher kann erfindungsgemäß eine Erkennung des Abstands zwischen den einander zugeordneten Geräten und Sprachsteuerungen erfolgen und diese nur dann wie zuvor beschrieben mittels Spracheingabe miteinander betrieben werden, falls die hierfür erforderliche räumliche Nähe eingehalten wird. Hierzu könnte der Abstand zwischen dem zu bedienenden Gerät und der zugeordneten Sprachsteuerung z.B. durch eine kurzreichweitige Funktechnologie wie z.B. Bluetooth bestimmt werden. So könnte die Reichweite einer Bluetooth-Verbindung innerhalb einer Küche ausreichend sein, aber nicht von dem zu bedienenden Gerät in der Küche bis zur zugeordneten Sprachsteuerung z.B. im Wohnzimmer, im Kinderzimmer oder in der Waschküche reichen. Nur wenn eine Bluetooth-Verbindung zwischen dem zu bedienenden Gerät und der zugeordneten Sprachsteuerung aufgebaut werden kann, kann auch die Sprachsteuerung für die Spracheingabe aktiviert werden.

Falls mehrere z.B. mittels WLAN vernetzte Geräte in einem Raum wie z.B. in der Küche vorhanden sind, aber nicht alle Geräte über die benötigte kurzreichweitige Funktechnologie verfügen, kann die Abstandsbestimmung mit Hilfe dieser Technologie auch stellvertretend übernommen werden. Dadurch kann die Wahrscheinlichkeit von Fehleingaben und unbeabsichtigter Aktivierung der Sprachsteuerung zumindest verringert werden. Falls mehrere Geräte erreichbar sind, können dennoch ggfs. auch mehrere Geräte aktiviert werden.

Wenn eine Gruppe von Geräten einer Sprachsteuerung zugeordnet ist, kann bevorzugt das aktivierte Gerät die Abstandsbestimmung durchführen. Bei mehreren benachbarten Geräten einer Küche könnte diese Funktion auch ein anderes Gerät aus dem Verbund übernehmen.

Gemäß einem weiteren Aspekt der Erfindung wird von der zugeordneten Sprachsteuerung eine Signalstärke eines von dem Gerät ausgesendeten Signals bestimmt, wobei wenigstens das Aktivieren der Sprachsteuerung durch das Gerät lediglich dann erfolgt, falls die bestimmte Signalstärke einen vorbestimmten Wert entspricht oder überschreitet.

Diesem Aspekt der Erfindung liegt die Erkenntnis zugrunde, dass eine kurzreichweitige Funktechnologie wie z.B. Bluetooth durchaus auch durch Wände hindurch funktionieren kann. Daher kann nicht absolut sicher unterschieden werden, ob sich die dem Gerät zugeordnete Sprachsteuerung in demselben Raum wie das Gerät oder in einem getrennten Raum innerhalb der Funkreichweite des Geräts befindet. Beispielsweise sind Spezialfälle denkbar, bei denen die Funkverbindung des Geräts mit einer Sprachsteuerung auf der anderen Seite einer Gipskartonwand besser ist als die Funkverbindung zu der zugeordneten Sprachsteuerung, welche auf der anderen Seite einer großen Kaffeemaschine, einer Mikrowelle und dergleichen auf der Arbeitsplatte der Küche steht.

Daher kann die zuvor beschriebene Abstandsbestimmung zwischen zu bedienendem Gerät und Sprachsteuerung durch die Messung der Signalstärke eines Funksignals wie z.B. Bluetooth, WLAN und dergleichen verbessert werden. Dadurch kann die Anzahl der Fehler weiter verringert werden. Insbesondere ist in Kombination mit der Berücksichtigung der letzten gerätespezifischen Informationen und bzw. oder Anweisungen im Vergleich zu einer parallelen Auswertung aller durch alle erreichbaren Sprachsteuerungen erfassten Sprachfetzen schon eine starke Verringerung der Fehlerquote möglich.

Gemäß einem weiteren Aspekt der Erfindung wird von dem Gerät zur zugeordneten Sprachsteuerung wenigstens eine zusätzliche Information gesendet, wobei wenigstens das Aktivieren der Sprachsteuerung durch das Gerät lediglich dann erfolgt, falls die gesendete zusätzliche Information von der zugeordneten Sprachsteuerung erfasst wird.

Mit anderen Worten kann das zu bedienende Gerät z.B. im nicht hörbaren Bereich ein kurzes Signal an die zugeordnete Sprachsteuerung senden, welches durch die Spracherkennung mit detektiert und z.B. als Code mit der Information und bzw. Anweisung, welche aus der erfassten Spracheingabe des Benutzers resultiert, mitgesendet werden kann. Dadurch kann die Information und bzw. Anweisung als Sprachnachricht auch ohne die zeitliche Zuordnung eindeutig dem zu bedienenden Gerät zugeordnet werden. Die zeitliche Zuordnung zwischen der Aktivierung der Sprachsteuerung durch das zu bedienende Gerät und dem Eintreffen der Sprachnachricht bei dem zu bedienenden Gerät kann zur Plausibilisierung als zusätzliche Sicherheitsfunktion eingesetzt werden.

Für den Fall, dass ein akustisches Signal in mehreren Räumen detektiert wird, kann auch hier analog z.B. zur Feldstärkemessung des Funksignals eine Messung des Schallpegels erfolgen. Das parallel akustisch an die Sprachsteuerung und per verschlüsselter Datenübertragung direkt an eine Cloud mitgesendete und von Nutzung zu Nutzung unterschiedliche Schallsignal kann als eine Art zwei-Wege-Authentifizierung auch als zumindest schwaches Mittel gegen einfache Replay-Hackerangriffe genutzt werden.

Die vorliegende Erfindung betrifft auch ein Gerät, vorzugsweise ein Haushaltsgerät, besonders vorzugsweise ein Küchengerät, zur Durchführung eines Verfahrens zur Bedienung eines Geräts durch einen Benutzer mittels einer Sprachsteuerung wie zuvor beschrieben, wobei das Gerät ausgebildet ist, eine Bedienung des Geräts von dem Benutzer zu erfassen, wobei das Gerät ferner ausgebildet ist, die Sprachsteuerung zu aktivieren, wobei die Sprachsteuerung ausgebildet ist, eine Spracheingabe des Benutzers zu erfassen, wobei die Sprachsteuerung ferner ausgebildet ist, eine Information und bzw. oder Anweisung in der erfassten Spracheingabe des Benutzers zu erkennen, und wobei die Sprachsteuerung ferner ausgebildet ist, eine Bedienung des Geräts gemäß der erkannten Information und bzw. oder Anweisung auszuführen. Auf diese Art und Weise kann ein Gerät geschaffen werden, um das erfindungsgemäße Verfahren mit seinen Eigenschaften und Vorteilen wie zuvor beschrieben umzusetzen und zu nutzen.

Ein Ausführungsbeispiel der Erfindung ist in den Zeichnungen rein schematisch dargestellt und wird nachfolgend näher beschrieben. Es zeigt
- Figur 1: eine schematische Darstellung eines zu bedienenden Geräts, einer Sprachsteuerung, eines weiteren Geräts sowie eines Benutzers; und
- Figur 2: ein schematisches Ablaufdiagramm eines erfindungsgemäßen Verfahrens.

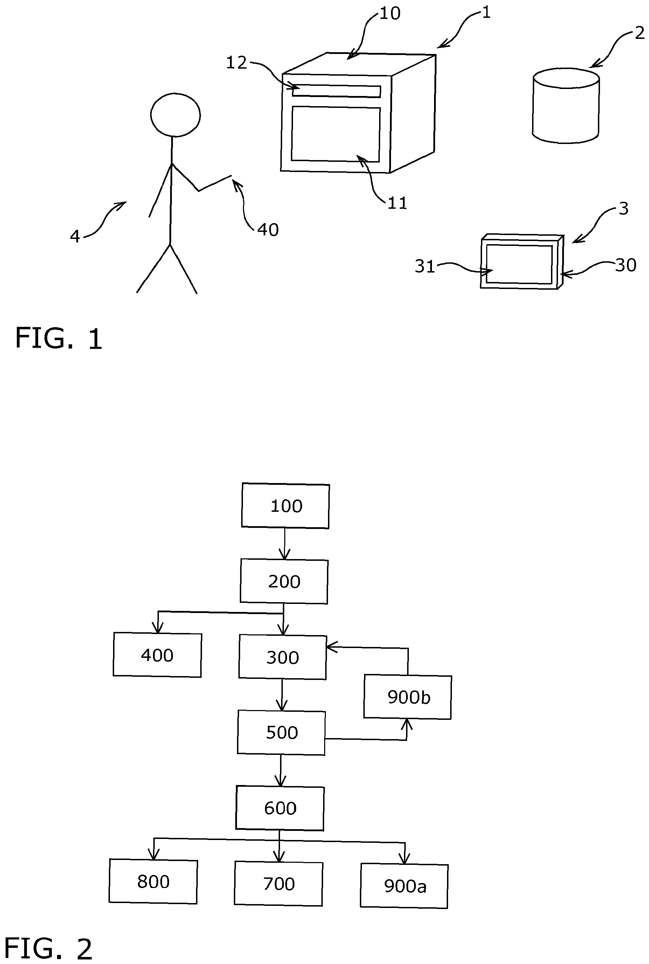

In der Figur 1 dargestellt ist ein zu bedienendes Gerät 1 in Form eines Haushaltsgeräts 1, nämlich in Form eines Küchengeräts 1 wie z.B. einem Dampfgarer 1. Der Dampfgarer 1 weist ein Gehäuse 10 auf, in dessen Inneren ein Garraum vorhanden ist (nicht dargestellt), welcher über eine Gehäuseöffnung zugänglich ist (nicht dargestellt). Diese Gehäuseöffnung kann mittels einer Garraumklappe 11 bzw. einer Garraumtür 11 verschlossen werden. Oberhalb der Garraumklappe 11 ist ein Bedienfeld 12 angeordnet, welches auch als Bedienblende 12 bezeichnet werden kann. Das Bedienfeld 12 weist verschiedene Eingabeelemente sowie eine Anzeige auf (nicht dargestellt), um einem Benutzer 4 verschiedene Möglichkeiten zu geben, den Dampfgarer 1 z.B. durch die Auswahl von Programmen sowie deren Parametrierung oder auch durch manuelle Vorgaben z.B. einer Gardauer, einer Gartemperatur und dergleichen zu bedienen und den Garvorgang von Lebensmittels zu beeinflussen.

Es ist eine Sprachsteuerung 2 vorhanden, welche auch als Sprachsteuerungssystem 2 oder als Sprachassistenzsystem 2 bezeichnet werden kann. Insbesondere kann die Sprachsteuerung 2 ein sprachgesteuerter persönlicher Assistent 2 wie z.B. ein Amazon Echo sein, welcher drahtlos signalübertragend mit dem Dampfgarer 1 verbunden ist.

Ferner ist ein weiteres Gerät 3 in Form eines Tablets 3 vorhanden, welches ein Gehäuse 30 mit einem Anzeige-/Bedienelement 31 in Form eines Touchscreens 31 aufweist. Über den Touchscreen 31 können dem Benutzer 4 Informationen wie z.B. Anweisungen zur Durchführung eines Rezeptes angezeigt sowie Eingaben des Benutzers 4 erhalten werden, welche der Benutzer 4 mit den Fingern einer Hand 40 tätigen kann. Auch das Tablet 3 ist signalübertragend mit dem Dampfgarer 1 sowie mit dem sprachgesteuerten persönlichen Assistenten 2 verbunden.

Mittels des Dampfgarers 1, des sprachgesteuerten persönlichen Assistenten 2, des Tablets 3 sowie des Benutzers 4 kann nun ein erfindungsgemäßes Verfahren der Figur 2 wie folgt ausgeführt werden:
Es erfolgt zunächst ein Erfassen 100 einer Bedienung des Dampfgarers 1 von dem Benutzer 4 durch den Dampfgarer 1. Dies kann umgesetzt werden, indem z.B. das Öffnen der Garraumklappe 11 von dem Dampfgarer 1 erkannt wird, was z.B. durch einen Sensor in der Mechanik der Befestigung der Garraumklappe 11 oder durch das Unterbrechen eines elektrisch leitfähigen Kontakts erfolgen kann. Durch das Öffnen der Garraumklappe 11 als Bedienung durch den Benutzer 4 kann von dem Dampfgarer 1 selbst erkannt werden, dass der Benutzer 4 den Dampfgarer 1 verwenden möchte.

In Reaktion hierauf erfolgt ein Aktivieren 200 des sprachgesteuerten persönlichen Assistenten 2 durch den Dampfgarer 1. Hierzu kann der Dampfgarer 1 drahtlos ein Aktivierungssignal bzw. einen Aktivierungsbefehl an den sprachgesteuerten persönlichen Assistenten 2 senden, welcher nicht nur das sonst übliche Signalwort wie z.B. "Alexa" ersetzt, sondern zusätzlich auch die Information beinhaltet, dass der Dampfgarer 1 vom Benutzer 4 bedient wurde.

Entsprechend kann der sprachgesteuerte persönliche Assistent 2 nun aus einem Bereitschaftsmodus erwachen und sein Mikrophon aktivieren, so dass ein Erfassen 300 einer Spracheingabe des Benutzers 4 durch den sprachgesteuerten persönlichen Assistenten 2 erfolgen kann.

Gleichzeitig kann ein Anzeigen 400 des aktivierten sprachgesteuerten persönlichen Assistenten 2 durch dem Dampfgarer 1 erfolgen. Beispielsweise kann hierzu ein entsprechendes Symbol der Bedienblende 12 erleuchtet werden. Alternativ oder zusätzlich kann beispielsweise die Garraumbeleuchtung, welche durch das Öffnen der Garraumklappe 11 bereits eingeschaltet wurde, mehrfach Aufblinken. In jedem Fall kann der Benutzer 4 auf diese Art und Weise darauf aufmerksam gemacht werden, dass ihm die Möglichkeit zur Verfügung steht, nun eine Spracheingabe an den sprachgesteuerten persönlichen Assistenten 2 zu tätigen, um den Dampfgarer 1 zu verwenden.

Entsprechend kann ein Erkennen 500 einer Information und bzw. oder einer Anweisung in der erfassten Spracheingabe des Benutzers 4 durch den sprachgesteuerten persönlichen Assistenten 2 erfolgen. Hierzu kann die zuvor erfasste Spracheingabe des Benutzers 4 vom sprachgesteuerten persönlichen Assistenten 2 ausgewertet und der Inhalt der Spracheingabe mittels Spracherkennung erkannt werden. Dieser Inhalt kann z.B. eine Information wie z.B. eine Temperaturangabe sein, mit welcher der Dampfgarer 1 betrieben werden soll. Zusätzlich oder alternativ kann die Spracheingabe des Benutzers 4 auch eine Anweisung erhalten, dass z.B. ein bestimmtes Garprogramm zu verwenden ist.

Um dem Benutzer 4 eine Kontrollmöglichkeit zu geben, ob seine Spracheingabe richtig von dem sprachgesteuerten persönlichen Assistenten 2 erkannt wurde, kann ein Ausgeben 600 einer Rückmeldung auf die erkannte Spracheingabe des Benutzers 4 erfolgen. Beispielweise können die erkannte Information und bzw. oder die erkannte Anweisung von dem sprachgesteuerten persönlichen Assistenten 2 als Sprache ausgegeben werden.

Anschließend kann ein Ausführen 700 einer Bedienung des Dampfgarers 1 durch den sprachgesteuerten persönlichen Assistenten 2 gemäß der erkannten Information und bzw. oder Anweisung erfolgen. Hierzu kann der sprachgesteuerte persönliche Assistent 2 mittels drahtloser Signalübertragung entsprechende Informationen und bzw. Anweisungen an den Dampfgarer 1 übertragen, damit der Dampfgarer 1 entsprechend verfahren kann. Dies kann somit alternativ zu einer manuellen Eingabemöglichkeit für den Benutzer 4 über die Bedienblende 12 des Dampfgarers 1 erfolgen.

Dabei kann die drahtlose Signalübertragung von dem sprachgesteuerten persönlichen Assistenten 2 an den Dampfgarer 1 seitens des sprachgesteuerten persönlichen Assistenten 2 zeitverzögert werden um abzuwarten, ob weitere Spracheingaben vom Benutzer 4 getätigt werden, welche ebenfalls zu berücksichtigen sind. Auch kann abgewartet werden, ob der Benutzer 4 in Reaktion auf die ihm von dem sprachgesteuerten persönlichen Assistenten 2 gegebene Rückmeldung seiner Spracheingabe eine Korrektur oder eine Wiederholung seiner Spracheingabe vornimmt, da diese von dem sprachgesteuerten persönlichen Assistenten 2 nicht zutreffend erkannt wurde und somit vom Benutzer 4 korrigiert werden muss.

Parallel zur drahtlosen Signalübertragung des sprachgesteuerten persönlichen Assistenten 2 an den Dampfgarer 1 kann ein Ausgeben 800 einer Information und bzw. oder einer Anweisung an das Tablet 3 erfolgen. Hierdurch kann beispielweise ein Fortschreiten zu einem weiteren Schritt eines Rezepts veranlasst werden, welches der Benutzer 4 mittels des Dampfgarers 1 ausführen möchte.

Nach erfolgter drahtloser Signalübertragung des sprachgesteuerten persönlichen Assistenten 2 an den Dampfgarer 1 kann ein direktes Deaktivieren 900a des sprachgesteuerten persönlichen Assistenten 2 durch den Dampfgarer 1 erfolgen. Dies kann insbesondere dann erfolgen, wenn der Dampfgarer 1 erkennt, dass alle Informationen und Anweisungen zur Durchführung eines Garprozesses vorliegen und somit keine weiteren Bedieneingaben des Benutzers 4 erforderlich sind.

Es kann auch ein Beibehalten 900b des sprachgesteuerten persönlichen Assistenten 2 für eine vorbestimmte Zeitdauer erfolgen, um dem Benutzer 4 weitere Spracheingaben zu ermöglichen. Dies kann insbesondere dann der Fall sein, falls noch nicht alle Informationen und Anweisungen zur Durchführung eines Garprozesses vorliegen und somit weitere Bedieneingaben des Benutzers 4 erforderlich sind.

### Bezugszeichenliste (Bestandteil der Beschreibung)

- 1: zu bedienendes Gerät; zu bedienendes Haushaltsgerät; zu bedienendes Küchengerät; Dampfgarer
- 10: Gehäuse
- 11: Garraumklappe; Garraumtür
- 12: Bedienfeld; Bedienblende

- 2: Sprachsteuerung; Sprachsteuerungssystem; Sprachassistenzsystem; sprachgesteuerter persönlicher Assistent

- 3: weiteres Gerät; Tablet
- 30: Gehäuse
- 31: Anzeige-/Bedienelement; Touchscreen

- 4: Benutzer
- 40: Hand des Benutzers 4

- 100: Erfassen Bedienung des Geräts 1 von Benutzer 4 durch Gerät 1
- 200: Aktivieren Sprachsteuerung 2 durch Gerät 1
- 300: Erfassen Spracheingabe des Benutzers 4 durch Sprachsteuerung 2
- 400: Anzeigen aktivierte Sprachsteuerung 2 durch Gerät 1
- 500: Erkennen Information und/oder Anweisung in erfassten Spracheingabe des Benutzers 4 durch Sprachsteuerung 2
- 600: Ausgeben Rückmeldung auf erkannte Spracheingabe des Benutzers 4
- 700: Ausführen Bedienung des Geräts 1 durch Sprachsteuerung 2 gemäß erkannter Information und/oder Anweisung
- 800: Ausgeben Information und/oder Anweisung an weiteres Gerät 3
- 900a: Deaktivieren aktivierte Sprachsteuerung 2 durch Gerät 1
- 900b: Beibehalten aktivierte Sprachsteuerung 2 für vorbestimmte Zeitdauer

## Patentansprüche

1. Verfahren zur Bedienung eines Geräts (1) durch einen Benutzer (4) mittels einer Sprachsteuerung (2) mit wenigstens den Schritten:
Erfassen (100) einer Bedienung des Geräts (1) von dem Benutzer (4) durch das Gerät (1),
Aktivieren (200) der Sprachsteuerung (2) durch das Gerät (1),
Erfassen (300) einer Spracheingabe des Benutzers (4) durch die Sprachsteuerung (2),
Erkennen (500) einer Information und/oder Anweisung in der erfassten Spracheingabe des Benutzers (4) durch die Sprachsteuerung (2), und
Ausführen (700) einer Bedienung des Geräts (1) durch die Sprachsteuerung (2) gemäß der erkannten Information und/oder Anweisung.

2. Verfahren nach Anspruch 1, **dadurch gekennzeichnet, dass**
die Bedienung des Geräts (1) durch den Benutzer (4) eine zusätzliche Bedienhandlung ist, welche über einen bestimmungsgemäßen Gebrauch des Geräts (1) hinausgeht, oder
die Bedienung des Geräts (1) durch den Benutzer (4) eine Bedienhandlung eines bestimmungsgemäßen Gebrauchs des Geräts (1) ist.

3. Verfahren nach Anspruch 1 oder 2, **dadurch gekennzeichnet, dass**
die Bedienung des Geräts (1) durch den Benutzer (4) berührend oder berührungslos erfolgt.

4. Verfahren nach einem der vorangehenden Ansprüche, **dadurch gekennzeichnet, dass**
die Bedienung des Geräts (1) durch den Benutzer (4) eine Annährung des Benutzers (4) an das Gerät (1) ist.

5. Verfahren nach einem der vorangehenden Ansprüche, **dadurch gekennzeichnet, dass**
das Erfassen (100) einer Bedienung des Geräts (1) von dem Benutzer (4) mittels eines modularen und/oder energieautarken Sensors erfolgt.

6. Verfahren nach einem der vorangehenden Ansprüche, **gekennzeichnet durch** wenigstens den weiteren Schritt nach dem Aktivieren (200) der Sprachsteuerung (2):
Anzeigen (400) der aktivierten Sprachsteuerung (2) durch das Gerät (1).

7. Verfahren nach einem der vorangehenden Ansprüche, **gekennzeichnet durch** wenigstens den weiteren Schritt nach dem Erfassen (300) einer Spracheingabe des Benutzers (4):
Ausgeben (600) einer Rückmeldung auf die erkannte Spracheingabe des Benutzers (4).

8. Verfahren nach einem der vorangehenden Ansprüche, **dadurch gekennzeichnet, dass**
das Ausführen (600) einer Bedienung des Geräts (1) durch die Sprachsteuerung (2) mit einem vorbestimmten zeitlichen Verzug erfolgt.

9. Verfahren nach einem der vorangehenden Ansprüche, **gekennzeichnet durch** wenigstens den weiteren Schritt nach dem Erfassen (300) einer Spracheingabe des Benutzers (4):
Ausgeben (800) einer Information und/oder Anweisung an ein weiteres Gerät (3).

10. Verfahren nach einem der vorangehenden Ansprüche, **gekennzeichnet durch** wenigstens den weiteren Schritt nach dem Ausführen (600) einer Bedienung des Geräts (1) durch die Sprachsteuerung (2):
Deaktivieren (900a) der aktivierten Sprachsteuerung (2) durch das Gerät (1).

11. Verfahren nach einem der Ansprüche 1 bis 9, **gekennzeichnet durch** wenigstens den weiteren Schritt nach dem Ausführen (600) einer Bedienung des Geräts (4) durch die Sprachsteuerung (2):
Beibehalten (900b) der aktivierten Sprachsteuerung (2) für eine vorbestimmte Zeitdauer.

12. Verfahren nach einem der vorangehenden Ansprüche, **dadurch gekennzeichnet, dass**
das Gerät (1) die Sprachsteuerung (2) aufweist.

13. Verfahren nach einem der Ansprüche 1 bis 11, **dadurch gekennzeichnet, dass**
die Sprachsteuerung (2) unabhängig von dem Gerät (1) ist.

14. Verfahren nach einem der vorangehenden Ansprüche, **dadurch gekennzeichnet, dass**
das Gerät (1) ein Haushaltsgerät (1), vorzugsweise ein Küchengerät (1), ist.

15. Verfahren nach einem der vorangehenden Ansprüche, **dadurch gekennzeichnet, dass**
durch den Schritt des Aktivierens (200) eine Mehrzahl von Sprachsteuerungen (2) durch das Gerät (1) aktiviert wird, und
durch den Schritt des Erfassens (300) einer Spracheingabe des Benutzers (4) durch wenigstens eine Sprachsteuerung (2) der Mehrzahl von Sprachsteuerungen (2) erfasst wird.

16. Verfahren nach Anspruch 15, **dadurch gekennzeichnet, dass**
durch den Schritt des Erfassens (300) mehrere Spracheingaben mehrerer Benutzer (4) durch jeweils wenigstens eine Sprachsteuerung (2) erfasst werden, und
durch den Schritt des Erkennens (500) einer Information und/oder Anweisung in den erfassten Spracheingaben der Benutzer (4) durch jeweils wenigstens eine Sprachsteuerung (2) die Information und/oder Anweisung als solche erkannt oder verworfen wird.

17. Verfahren nach Anspruch 16, **dadurch gekennzeichnet, dass**
die erfassten Spracheingaben einer Sprachsteuerung (2) vorrangig gegenüber den erfassten Spracheingaben der wenigstens einen weiteren Sprachsteuerung (2) behandelt werden.

18. Verfahren nach einem der vorangehenden Ansprüche, **dadurch gekennzeichnet, dass**
eine Mehrzahl von Geräten (1) und/oder eine Mehrzahl von Sprachsteuerungen (2) vorhanden ist/sind,
wobei ein oder mehrere Geräte (1) einer Sprachsteuerung (2) zugeordnet ist/sind.

19. Verfahren nach Anspruch 18, **dadurch gekennzeichnet, dass**
zwischen mindestens einem der einander zugeordneten Geräte (1) und der Sprachsteuerung (2) eine Abstandserkennung erfolgt,
wobei wenigstens das Aktivieren (200) der Sprachsteuerung (2) durch das Gerät (1) lediglich dann erfolgt, falls die einander zugeordneten Geräte (1) und Sprachsteuerungen (2) als sich innerhalb eines vorbestimmten Abstands zu einander befindend erkannt werden.

20. Verfahren nach einem der vorangehenden Ansprüche, **dadurch gekennzeichnet, dass** zwischen mindestens einem Gerät (1) und einer Mehrzahl von Sprachsteuerungen (2) eine Abstandserkennung erfolgt,
wobei wenigstens das Aktivieren (200) der Sprachsteuerung (2) durch das Gerät (1) lediglich für die Sprachsteuerung erfolgt, welche den geringsten Abstand zu dem aktivierten Gerät (1) aufweist und bevorzugt einen Maximalabstand nicht überschreitet.

21. Verfahren nach einem der vorangehenden Ansprüche 18-20, **dadurch gekennzeichnet, dass**
von der zugeordneten Sprachsteuerung (2) eine Signalstärke eines von dem Gerät (1) ausgesendeten Signals bestimmt wird,
oder
von dem Gerät (1) eine Signalstärke eines von der zugeordneten Sprachsteuerung (2) ausgesendeten Signals bestimmt wird,
wobei wenigstens das Aktivieren (200) der Sprachsteuerung (2) durch das Gerät (1) lediglich dann erfolgt, falls die bestimmte Signalstärke einen vorbestimmten Wert entspricht oder überschreitet.

22. Verfahren nach einem der vorangehenden Ansprüche 18-21, **dadurch gekennzeichnet, dass**
von dem Gerät (1) eine Signalstärke eines oder mehrerer von einer Mehrzahl von Sprachsteuerungen (2) ausgesendeten Signale bestimmt wird,
wobei wenigstens das Aktivieren (200) der Sprachsteuerung (2) durch das Gerät (1) lediglich für die Sprachsteuerung erfolgt, welche relativ zu einer bekannten Ausgangssignalstärke des Signals der Sprachsteuerung das höchste Signal aufweist.

23. Verfahren nach Anspruch 19 oder 20, **dadurch gekennzeichnet, dass** von dem Gerät (1) zur zugeordneten Sprachsteuerung (2) wenigstens eine zusätzliche Information gesendet wird,
wobei wenigstens das Aktivieren (200) der Sprachsteuerung (2) durch das Gerät (1) lediglich dann erfolgt, falls die gesendete zusätzliche Information von der zugeordneten Sprachsteuerung (2) erfasst wird.

24. Gerät (1), vorzugsweise Haushaltsgerät (1), besonders vorzugsweise Küchengerät (1), zur Durchführung eines Verfahrens zur Bedienung eines Geräts (1) durch einen Benutzer (4) mittels einer Sprachsteuerung (2) gemäß einem der vorangehenden Ansprüche,
wobei das Gerät (1) ausgebildet ist, eine Bedienung des Geräts (1) von dem Benutzer (4) zu erfassen,
wobei das Gerät (1) ferner ausgebildet ist, die Sprachsteuerung (2) zu aktivieren,
wobei die Sprachsteuerung (2) ausgebildet ist, eine Spracheingabe des Benutzers (4) zu erfassen,
wobei die Sprachsteuerung (2) ferner ausgebildet ist, eine Information und/oder Anweisung in der erfassten Spracheingabe des Benutzers (4) zu erkennen, und
wobei die Sprachsteuerung (2) ferner ausgebildet ist, eine Bedienung des Geräts (1) gemäß der erkannten Information und/oder Anweisung auszuführen.
